# EUROPEAN PATENT APPLICATION

(11) **EP 0 893 752 A1**
(43) Date of publication of application: **27.01.1999**
(21) Application number: 98301213.9
(22) Date of filing: 19.02.1998
(51) Int. Cl.: G06F 1/00, H04N 7/16

(54) **Method for identifying users**

(30) Priority: 26.07.1997 KR 9735377
(71) Applicant: Samsung Electronics Co., Ltd., Suwon-city, Kyungki-do (KR)
(72) Inventor: Ko, Jung-Wan, Suwon-city, Kyungki-do (KR)
(74) Representative: Chugg, David John

(57) **Abstract**

A method for identifying users of electric and electronic apparatuses (14) in order to allow only authorized users to operate them is characterized in that the users are identified by checking the personal information recorded in the users' electronic identification cards (19). The electronic identification cards (19) contain built-in chips to record the users' personal information.

## Description

The present invention relates to a method for imposing restrictions on a user's playing of home video players such as a VCR (Video Cassette Recorder) or DVD (Digital Video Disc) to prevent minors from viewing prohibited video products, and particularly to a method for identifying users by means other than conventional passwords.

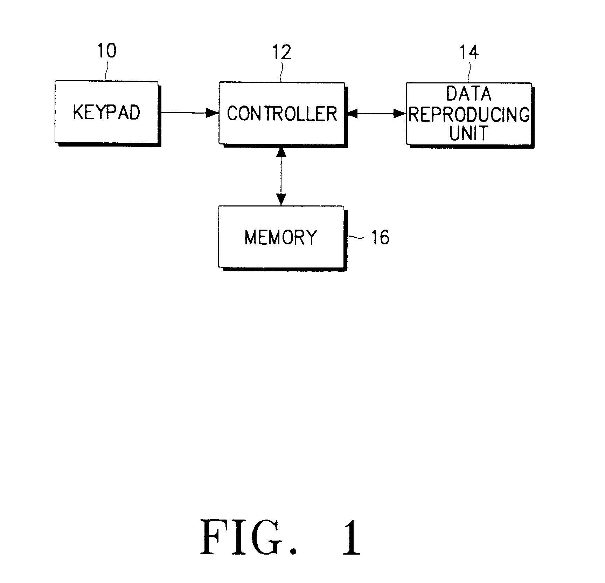

The conventional method for controlling minors' home video playing is described with reference to the accompanying drawing. Referring to Figure 1, a conventional home video playing apparatus such as a VCR or DVD comprises a controller 12, a keypad 10, a memory 16, and a data reproducing unit 14. In the conventional method, the adults (such as a minor's parents) set a specified password for the apparatus by means of keypad 10 to restrict minors' access to the prohibited video products. Such a password is checked by controller 12 and stored in memory 16.

When playing a video product after the password is stored in memory 16, the controller 12 displays a message requesting the user to input the password on a display screen (not shown in the drawing) in accordance with the prescribed restrictions on the specified video products, or independent thereof, according to the preset requirements necessary for restrictions on the minors' access to the video products. Thereupon, when the user inputs the password, the controller 12 compares the input password with that stored in memory 16, thereby performing the playback operation only when both passwords are identical, or otherwise cancelling the playback operation.

In addition to the above method, a further conventional method is employed, wherein the video playing apparatuses are provided with specific physical locking means, whereby such apparatuses can be operated only when the physical locking means are released by means of user's physical key.

In the case of a simple password, such conventional methods are rather vulnerable in terms of security, and have the drawbacks that when the authorized users forget the passwords, such apparatuses can not be utilized, and when a solution for password is provided to the user, the security function of the apparatus is deteriorated in terms of efficiency. It is also a further drawback that there is the possibility of losing and a problem of safekeeping physical keys, which physical keys also sometimes cause such apparatuses to malfunction.

Accordingly, it is an aim of embodiments of the present invention to provide a method for restricting the users access to permitted video products and which is capable of eliminating the aforementioned drawbacks of the prior art.

It is another aim of embodiments of the present invention to provide a method for imposing restrictions on unauthorized access to video products or video playing apparatuses by accurately identifying users.

According to an aspect of the present invention, there is provided a method for identifying users of electric and electronic apparatuses in order to allow only authorized users to operate them, the method being characterized in that the users are identified by checking personal information recorded in users' electronic identification cards.

According to a second aspect of the invention, there is provided a method for identifying users of video playback apparatus in order to allow only authorized users to view video programs using said apparatus, the method being characterized in that said users are identified by checking personal information recorded in users' electronic identification cards.

Preferably, said electronic cards contain built-in chips to record said users' personal information.

Preferably, said apparatus is provided with a card reader for interfacing with said built-in chips to identify said users by checking said users' personal information stored in said built-in chips.

Preferably, said electronic identification cards comprise electronic residence registration cards.

Preferably, said apparatus is arranged to store data of authorized users during a set-up mode and to compare details of an input identification card with said data of authorized users during an identification mode and allow only authorized users to operate said apparatus.

Preferably, in said identification mode if said comparison indicates that an input identification card does not correspond to an authorized user then the comparison is repeated a prescribed number of times and, if said repeated comparison still indicates that the card does not belong to an authorized user then details of the unauthorized person are stored by the apparatus and use of the apparatus by the unauthorized person is inhibited.

According to a third aspect, there is provided an electric or electronic apparatus provided with a card reader to allow operation of said apparatus only by authorized users, the apparatus being characterized in that users are identified by checking personal information recorded in personal electronic identification cards.

The apparatus of the third aspect may further comprise any one or more features from the accompanying claims, abstract, description or Figures in any combination.

For a better understanding of the invention, and to show how embodiments of the same may be carried into effect, reference will now be made, by way of example, to the accompanying diagrammatic drawings, in which:
Figure 1 is a block diagram of a conventional device for controlling minors' home video playing according to the prior art;
Figure 2 is a block diagram illustrating a device employing an embodiment of the inventive method for restricting minors access to only permitted video products;
Figure 3 is a control flow chart of the controller for setting restrictions on minors' viewing according to a preferred embodiment of the present invention; and
Figure 4 is a control flow chart of the controller for controlling the above restricting operation according to a preferred embodiment of the present invention.

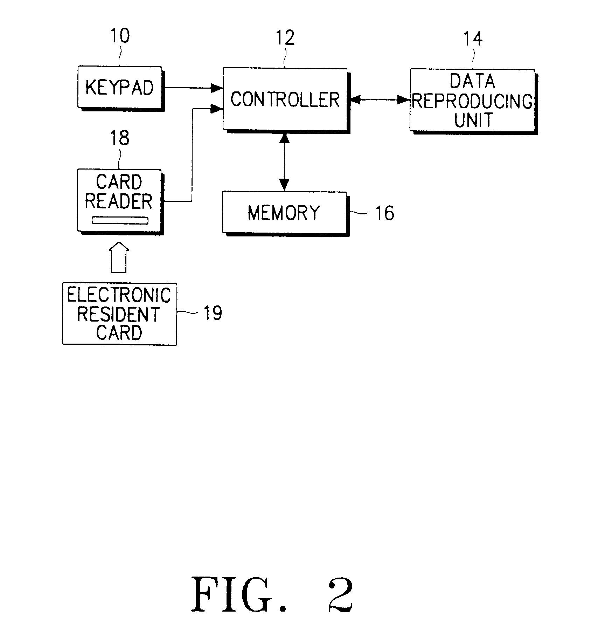

Referring to Figure 2, the inventive method for restricting minors to permitted viewing according to the preferred embodiment of the present invention is described in the following with respect to a VCR or a DVD both consisting of a controller 12, a keypad 10, a memory 16, and a data reproducing unit 14.

In order to identify users, the preferred embodiment of the present invention employs electronic identification cards which contain various personal information recorded in a built-in chip to be read by special card readers. Electronic residence registration cards of this type shall be issued to all citizens in the near future by the Korean government in place of their current residence registration cards to all citizens.

The apparatus is provided with a card reader 18 for reading the related information from the electronic identification card 19. The controller 12 is provided with a program for identifying the user by means of the personal information recorded in the above card so as to perform a restriction operation on the minors' unauthorized viewing.

Users such as adults and minors' parents who intend to place restrictions on minors' unauthorized viewing of video products input the information about the restrictions into controller 12 via keypad 10 of the above apparatus configured according to the preferred embodiment of the present invention. Detailed information about the actual user and his or her authorization is read from the electronic identification card 19 by the card reader 18, whereupon the controller 12 compares the information read from the electronic identification card 19 with the information stored in the memory 16 and, if acceptable, sets a new control state and stores necessary information in the memory 16. Thereafter, the controller 12 outputs various control signals based on the newly set control state to the data reproducing unit 14, thereby controlling the data reproducing unit 14 to be operated appropriately.

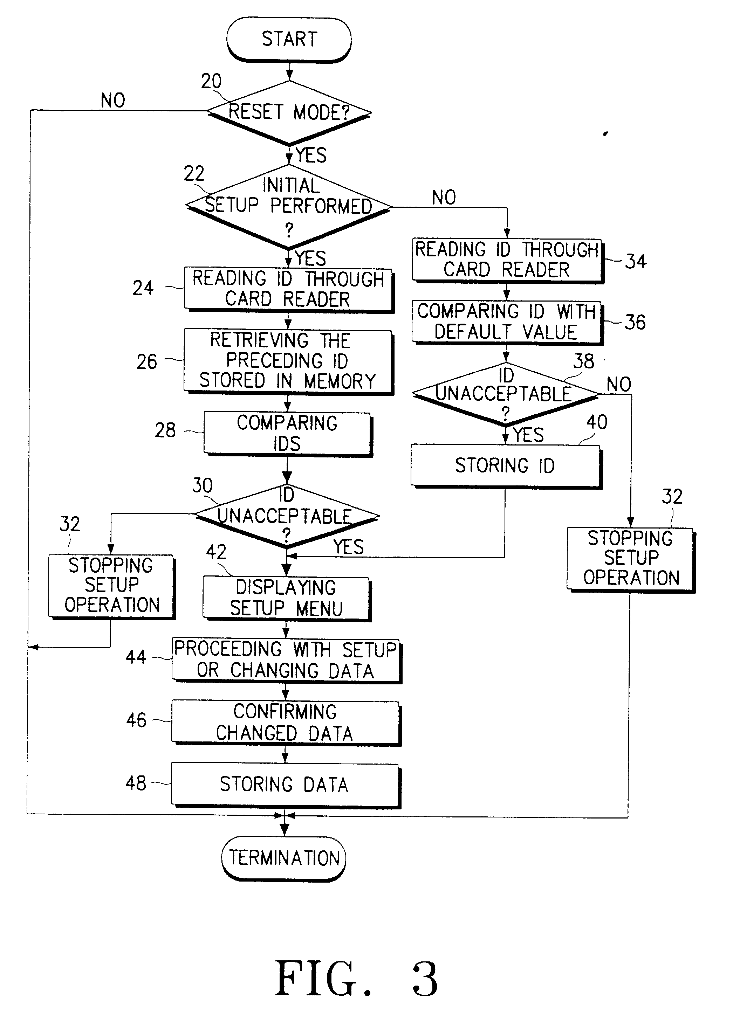

Referring to Figure 3, the controller 12 checks in step 20 whether the current state is reset mode. The reset mode can be performed by "authorized users" (e.g. adults and parents intending to put in place a restriction) manipulating a specified key provided on the keypad 10. If the current state is the reset mode, the controller 12 proceeds to step 22 to check whether the initial setup has been performed. The initial setup can be performed during initial start-up of the apparatus intended for setting restrictions on unauthorized video playing, whereby the authorized user is registered by a manufacturer or supplier.

If the initial setup has not been performed yet, the controller 12 proceeds to step 34 to read the user's personal identification information (hereinafter referred to as "ID") from the electronic identification card 19 (hereinafter referred to as "card") through the card reader 18. Thereupon in step 36, the controller 12 compares the above ID read from the card 19 with the default value stored in the memory 16, and in step 38 checks whether the ID is acceptable, whereby if the ID is unacceptable, the controller 12 proceeds to step 32 to stop/terminate the setup operation, and if the ID is acceptable, proceeds to step 40 to store the ID in the memory 16 and further proceed to step 42.

If the initial setup has already been performed, the controller 12 proceeds from step 22 to step 24 to read ID from card 19 through card reader 18, and further proceeds to step 26 to retrieve ID stored in the memory 16, thereupon proceeding to step 28 to compare both IDs with each other. Thereafter in step 30, the controller 12 checks whether the user's ID read from the card 19 is acceptable and, if unacceptable, proceeds to step 32 to stop/terminate the setup operation, and if acceptable, proceeds to step 42.

In step 42, the controller 12 starts the setup operation while displaying a setup menu on a display window (not shown in the drawing). Thereupon in step 44, the controller 12 proceeds with the setup operation or changes various control data in response to the key data generated by manipulating the keypad 10. The control data include various restricting data for controlling minors' video viewing, for example, such as age limit, or control data for setting the obligatory procedure of checking ID in advance whenever video products are played irrelevant to restrictions on minors' viewing of video program.

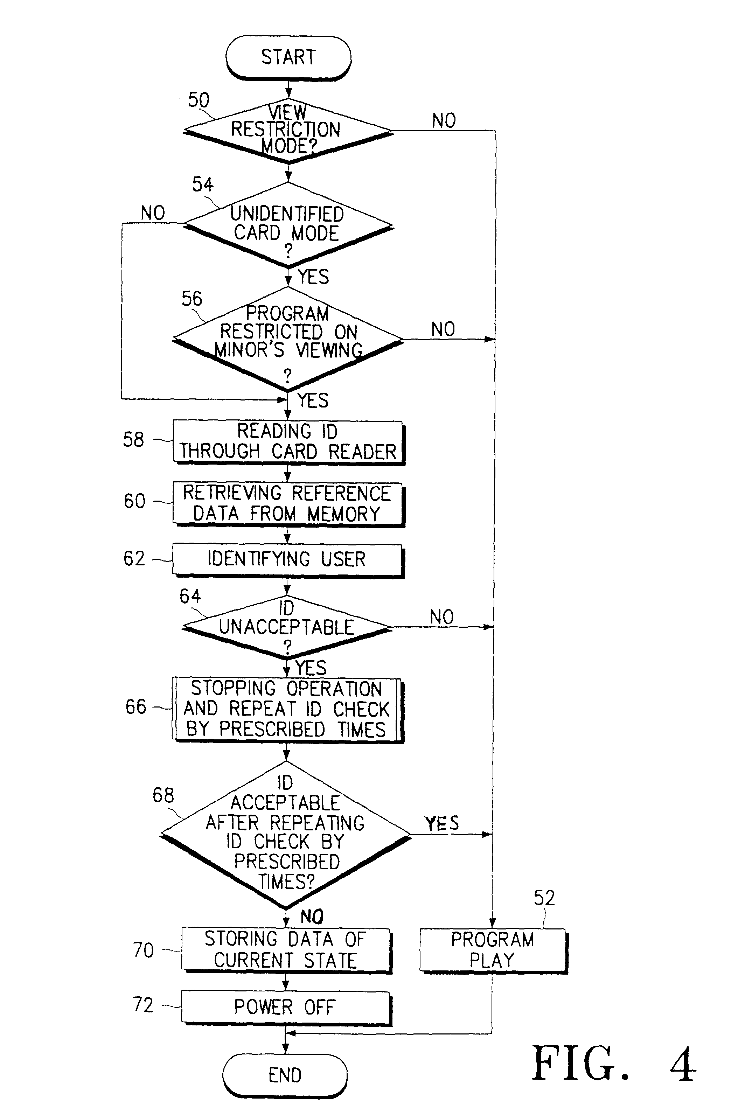

Referring to Figure 4, the control procedure of the restricting operation is described in detail as follows. In step 50, the controller 12 checks whether the current state is the viewer restriction mode which is set during the setup process as shown in Figure 3. If the current state is not the viewer restriction mode, the controller 12 proceeds to step 52 to play back the program (i.e., the video product) as it is, and if the current state is the viewer restriction mode, proceeds to step 54 to check whether the card 19 is in an unidentified state. The above step can be also performed during the setup process as shown in Figure 3.

If the card 19 is in the unidentified state, the controller 12 proceeds to step 56 to analyze the information about restrictions on minors' viewing with respect to the program to be played, thereby checking whether such program is set to the state of restriction on minors' viewing. As a result if the program is not set to the state of restriction on minors' viewing, the controller 12 proceeds to step 52 to play the program, and if the program is set to the sate of restriction on minors' viewing, the controller 12 proceeds to step 58 to begin to check ID of the card 19 in order to judge whether the user is an authorized user.

Besides if the card 19 is in the identified state in step 54, the controller 12 proceeds likewise to step 58 to begin to check ID of the card 19, thereby reading out ID from the card 19 through the card reader 18. Thereupon in step 60, the controller 12 retrieves the ID reference data stored in the memory 16 to identify the user in step 62.

Thereupon in step 64, the controller 12 checks whether the user is an unauthorized user, and if the user's ID is acceptable, the controller 12 proceeds to step 52 to play the corresponding video program, and if the user's ID is unacceptable, the controller 12 proceeds to step 66 to stop the current operation and repeat the ID check by specified times and further proceeds to step 68, whereby if the user's ID is proved to be acceptable, the controller 12 proceeds to step 52 to play the relevant video program, and if unacceptable, proceeds to step 70 to store the above unacceptable ID in the memory 16 so that the authorized user can check later the list of the unauthorized users' IDs. Thereafter the controller 12 proceeds to step 72 to turn off the power of the apparatus and terminate the current operation. As described above, the procedure of imposing restrictions on minors' access to prohibited video products is completed.

In addition to the above example for restricting minors' unauthorized video playing, the above inventive method can identify the user by checking the complete personal information such as user's name, age, sex, and resident number, and accordingly it is also possible that the authorized users can be restricted to a small number of, for instance, authorized adults such as the parents of a particular minor whose details are registered in the memory 16 so as to prevent minors and others from wrongfully using the apparatus.

Although the embodiment of the present invention has been described with respect to VCR and DVD, the inventive method can be appropriately applied to security systems for personal computers by adopting the operating procedures as shown in Figures 3 and 4.

As described above, embodiments of the present invention have the advantage that users can be correctly identified by means of electronic identification cards, thereby facilitating and enabling the identification of unauthorized users attempting wrongful access to the apparatus to enable the imposition of restrictions on their access to the apparatus and the video products. The above inventive method is more convenient than the conventional method employing passwords.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for identifying users of electric and electronic apparatus in order to allow only authorized users to operate them, the method being characterized in that said users are identified by checking personal information recorded in users' electronic identification cards.

2. A method for identifying users of video playback apparatus in order to allow only authorized users to view video programs using said apparatus, the method being characterized in that said users are identified by checking personal information recorded in users' electronic identification cards.

3. A method as defined in Claim 1 or 2, wherein said electronic identification cards contain built-in chips to record said users' personal information.

4. A method as defined in Claim 3, wherein said apparatus is provided with a card reader for interfacing with said built-in chips to identify said users by checking said users' personal information stored in said built-in chips.

5. A method for identifying users as defined in any of claims 1 to 4, wherein said electronic identification cards comprise electronic residence registration cards.

6. A method for identifying users as defined in Claim 4 or 5, wherein said apparatus is arranged to store data of authorized users during a set-up mode and to compare details of an input identification card with said data of authorized users during an identification mode and allow only authorized users to operate said apparatus.

7. A method according to claim 6, wherein in said identification mode if said comparison indicates that an input identification card does not correspond to an authorized user then the comparison is repeated a prescribed number of times and, if said repeated comparison still indicates that the card does not belong to an authorized user then details of the unauthorized person are stored by the apparatus and use of the apparatus by the unauthorized person is inhibited.

8. Electric or electronic apparatus provided with a card reader to allow operation of said apparatus only by authorized users, the apparatus being characterized in that users are identified by checking personal information recorded in personal electronic identification cards.

9. Apparatus according to claim 8, further comprising any one or more features from the accompanying claims, abstract, description or Figures in any combination.
